Europäisches Patentamt

European Patent Office

Office européen des brevets

(19)

(11) **EP 1 039 716 B1**

(12) **EUROPEAN PATENT SPECIFICATION**

(45) Date of publication and mention
of the grant of the patent:
**16.04.2003 Bulletin 2003/16**

(51) Int Cl.⁷: **H04L 27/26**

(21) Application number: **99125995.3**

(22) Date of filing: **28.12.1999**

(54) **OFDM transmission signal repeater and receiver**

Zwischenverstärker eines OFDM-Übertragungssignals und Empfänger

Répéteur d'un signal de transmission MDFO et récepteur

(84) Designated Contracting States:
**DE FR GB**

(30) Priority: **25.03.1999 JP 8141199**

(43) Date of publication of application:
**27.09.2000 Bulletin 2000/39**

(73) Proprietor: **KABUSHIKI KAISHA TOSHIBA**
**Kawasaki-shi, Kanagawa-ken 210-8572 (JP)**

(72) Inventors:
• **Suga, Masaru**
  **1-1-1 Shibaura, Minato-ku Tokyo 105-8001 (JP)**
• **Isobe, Seiji**
  **1-1-1 Shibaura, Minato-ku Tokyo 105-8001 (JP)**
• **Sawada, Takeshi**
  **1-1-1 Shibaura, Minato-ku Tokyo 105-8001 (JP)**

(74) Representative: **HOFFMANN - EITLE**
**Patent- und Rechtsanwälte**
**Arabellastrasse 4**
**81925 München (DE)**

(56) References cited:
**EP-A- 0 613 266**        **EP-A- 0 772 310**
**US-A- 4 701 935**        **US-A- 4 776 032**
**US-A- 4 789 993**

EP 1 039 716 B1

**Description**

The present invention relates to a repeater and a receiver of OFDM (orthogonal frequency division multiplex) transmission signal used, for example, in digital transmission of medium wave, short wave, ground wave, satellite, cable television repeating transmitter and others.

As digital broadcasting system of next generation, development of ground digital broadcast by utilizing the existing ground wave TV band width is being promoted. As its transmission method, the OFDM (orthogonal frequency division multiplex) system is employed as the standard system in Japan and Europe. The OFDM system is considered to be applied in digital broadcasting of medium wave, short wave, satellite and cable television, not limited to the ground wave only.

In any broadcasting system, a repeater is used in order to expand the coverage and eliminate the dead zone. In the television broadcasting of conventional analog system, to suppress the distortion in the transmission path from the transmitter to the repeater, the transmission path characteristic is measured at the point of installation of the repeater, and the' frequency characteristic of the filter provided in the IF stage of the repeater is adjusted on the basis of its characteristic and reverse transmission path characteristic.

By contrast, it is impossible to apply the analog system in the digital system. In the case of digital system, it is required to compensate the distortion of transmission path such as multipath more accurately. The preset compensation used in the analog system cannot be employed in the digital system. It is because the changing characteristics of the transmission path must be detected and compensated.

On the other hand, in the television broadcasting of the conventional analog system, SFN (Single Frequency Network) is not performed. Accordingly, in the repeater, it is not required to consider effects of circulating transmission output into reception input, and it is enough by isolating between the reception antenna and transmission antenna.

In the digital television broadcasting by OFDM system, the SFN can be performed. In this case, since the reflected wave of the transmission wave is mixed in the original incoming wave and received, it is not enough by isolating between the reception antenna and transmission antenna. It is hence required to compensate the reflected wave of the transmission wave and other circulating components accurately.

As mentioned above, when using the repeater in digital broadcasting by the OFDM system, it is required to compensate the transmission path distortion from the transmitter and coupling wave components of transmission wave of the own device accurately, but the compensation technique of the conventional analog system cannot be employed, and it was difficult to compensate adaptively the transmission path characteristics and circulating characteristics which vary with the season, weather and time.

In EP-A-0772310 there is disclosed an OFDM active deflector comprising an input antenna for receiving an OFDM input signal, an output antenna for transmitting an OFDM signal on substantially the same frequency as the input signal, and an amplification path between the input and output antennas. The document is particularly directed towards detecting and compensating for changing characteristics of the transmission path between the input and output antennas, and canceling out feedback therebetween.

it is hence a first object of the present invention to solve the above problems by presenting an OFDM transmission signal repeater capable of adjusting easily and compensating adaptively the transmission path characteristics and circulating characteristics which vary with the season, weather and time.

It is a second object of the present invention to present an OFDM transmission signal receiver capable of receiving the OFDM signal at high precision by utilizing the present invention capable of compensating the transmission path characteristics adaptively in the above OFDM transmission signal repeater.

According to one aspect of the present invention there is provided an OFDM (orthogonal frequency division multiplex) transmission signal repeater including receiving means for receiving OFDM transmission signals, and transmitting means for retransmitting the OFDM transmission signals received by these means at the same frequency,

characterized by comprising:

compensating means for receiving the reception signals obtained by the receiving means, compensating the amplitude and phase characteristic of the reception signals on the basis of a given compensation amount, removing undesired wave components due to circulating and multipath, and sending the rest to the transmitting means,
autocorrelation operating means for delaying the reception signals obtained by the receiving means sequentially by a specified time, and detecting the correlation before and after the delay,
interference detecting means for determining the delay time of the undesired wave as compared with a principal wave in the reception signals from the relation between the correlation detection signal and delay time obtained by the autocorrelation operating means, and compensation amount operating means for determining the amplitude and phase characteristic of the undesired waves contained in the reception signals from the output of the compensating means on the basis of the delay time of the undesired waves obtained by the interference detecting means, and determining the compensation amount to be given to the compensating means from its reverse characteristic, and

wherein the interference detecting means includes correlation characteristic holding means for holding the correlation characteristic detected preliminarily, either by the frequency of the OFDM transmission signals or, from the input signal in a situation free from circulating, and includes correlation signal processing means for detecting the interference component small in the level contained in the -input signal, by removing the components of correlation characteristic held by the correlation characteristic holding means from the correlation characteristic detected by the autocorrelation operating means, or from the input signal, respectively.

According to another aspect of the present invention there is provided an OFDM (orthogonal frequency division multiplex) transmission signal receiver including receiving means for receiving OFDM transmission signals, and demodulating means for demodulating the transmission signals multiplexed by FFT treatment of the reception signals obtained by the receiving means, characterized by comprising:

compensating means for receiving the reception signals obtained by the receiving means, compensating the amplitude and phase characteristic of the reception signals on the basis of a given compensation amount, removing undesired wave components due to circulating and multipath, and sending the rest to the demodulating means,

autocorrelation operating means for delaying the reception signals obtained by the receiving means sequentially by a specified time, and detecting the correlation before and after the delay,

interference detecting means for determining the delay time of the undesired wave as compared with a principal wave in the reception signals from the relation between the correlation detection signal and delay time obtained by the autocorrelation operating means, and

compensation amount operating means for determining the amplitude and phase characteristic of the undesired waves contained in the reception signals from the output of the compensating means on the basis of the delay time of the undesired waves obtained by the interference detecting means, and determining the compensation amount to be given to the compensating means from its reverse characteristic, and wherein the interference detecting means includes correlation characteristic holding means for holding the correlation characteristic detected preliminarily, either by the frequency of the OFDM transmission signals or, from the input signal in a situation free from circulating, and includes correlation signal processing means for detecting the interference component small in the level contained in the input signal, by removing the components of correlation characteristic held by the correlation characteristic holding means from the correlation characteristic detected by the autocorrelation operating means, or from the input signal, respectively.

The repeater or receiver of the invention may further comprise signal component detecting means for detecting whether or not the signal component is contained in the reception signal of the OFDM transmission signal, and the compensation process of the compensating means may be stopped when this means detects that the signal component is not so contained.

The compensating amount operating means of the repeater may include failure detecting means for detecting abnormality of input signal, and output control means for alternating or cutting off the relay output when abnormality is detected by this failure detecting means.

The repeater may further comprise a band limiting filter for suppressing the components outside of the band from a re-transmission signal when generating the retransmission signal from the signal obtained from the compensating means.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a block diagram showing a constitution of a ground wave digital television broadcast repeater of OFDM system in a first embodiment of the present invention.

FIG. 2 is a block diagram showing a constitution of a compensator used in the embodiment.

FIG. 3 is a block diagram showing other constitution of the compensator used in the embodiment.

FIG. 4 is a block diagram showing a constitution of a ground wave digital television broadcast repeater . of OFDM system in a second embodiment of the present invention.

FIG. 5 is a block diagram showing a constitution of a ground wave digital television broadcast repeater of OFDM system in a third embodiment of the present invention.

FIG. 6 is a block diagram showing a specific constitution of an interference detector used in the embodiment.

FIG. 7 is a block diagram showing a specific constitution of a compensation amount detector used in the embodiment.

FIG. 8 is a block diagram showing a specific constitution of an interference detecting portion of the interference detector used in the embodiment.

FIG. 9 is a block diagram showing a specific constitution of a compensation amount operating portion of the compensation amount detector used in the embodiment.

FIG. 10 is a block diagram showing a constitution of an embodiment of an OFDM transmission signal receiver-of the present invention.

FIG. 11 is a block diagram showing a constitution of other embodiment of an OFDM transmission signal receiver of the present invention.

FIG. 12 is a block diagram showing a constitution of a different embodiment of an OFDM transmission signal receiver of the present invention.

Referring now to the drawings, embodiments of the present invention are described in detail below.

(First Embodiment)

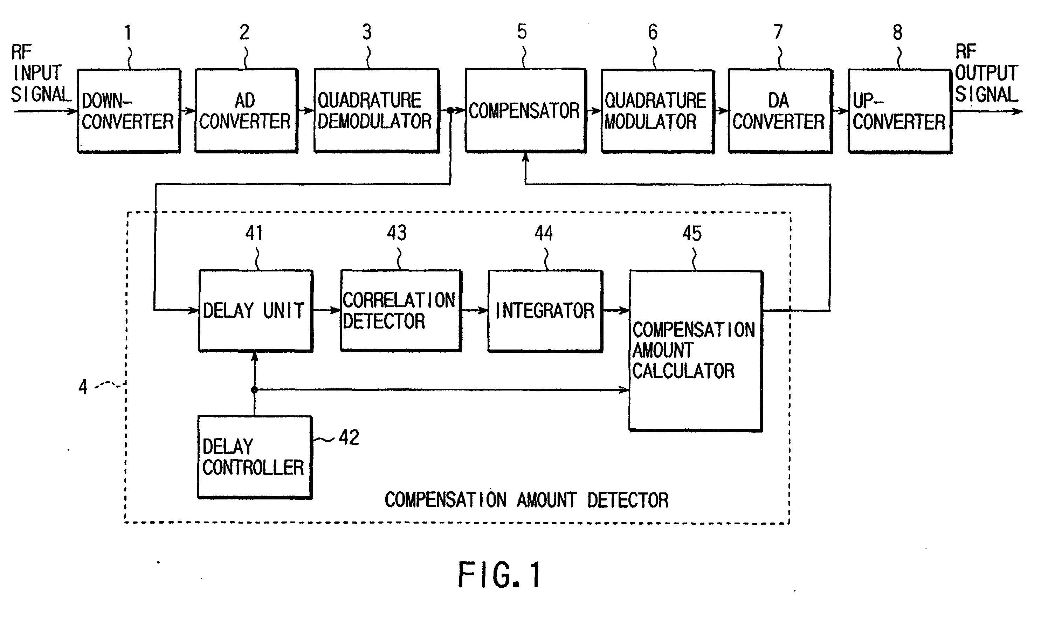

FIG. 1 shows an OFDM transmission signal repeater of the present invention used in digital terrestrial television broadcasting by OFDM system. In FIG. 1, an RF input signal to be relayed is put in a down-converter 1, and is converted in frequency from radio frequency (RF) band to an intermediate frequency (IF) band to be an IF signal. This IF signal is converted into a digital signal by an AD (analog/digital) converter 2, and is further converted into a complex baseband OFDM signal by a quadrature demodulation circuit 3, and is put into a compensation amount detector 4 and a compensator 5.

The compensation amount detector 4 is composed of a delay unit 41, a delay controller 42, a correlation detector 43, an integrator 44, and a compensation amount operator 45.

The IF signal input in the compensation amount detector 4 is supplied into the delay unit 41. This delay unit 41 is intended to delay the digital baseband OFDM signal according to a delay time control signal from the delay controller 42 by using, for example, RAM memory or FIFO memory, and its delay output is supplied into the correlation detector 43. This correlation detector 43 receives the input signal and output signal of the delay unit 41, and detects the complex correlation of the two by using, for example, a complex multiplier, and its detection result is supplied into the integrator 44. This integrator 44 integrates the complex correlation signal form the correlation detector 43 and removes effects of noise or the like by using, for example, an interval integrator for dividing a cumulative value by a cumulative time, and its output is supplied into the compensation amount operator 45 as a correlation detection signal.

This compensation amount operator 45 receives the delay time control signal issued from the delay controller 42 and the correlation detection signal issued from the integrator 44, and determines the correlation coefficient, and compensates the compensation signal showing the amplitude phase compensation component from its reverse characteristic. The compensation signal is obtained, for example, as an IQ signal of correlation. The delay time control signal and compensation signal are sent into the compensator 5.

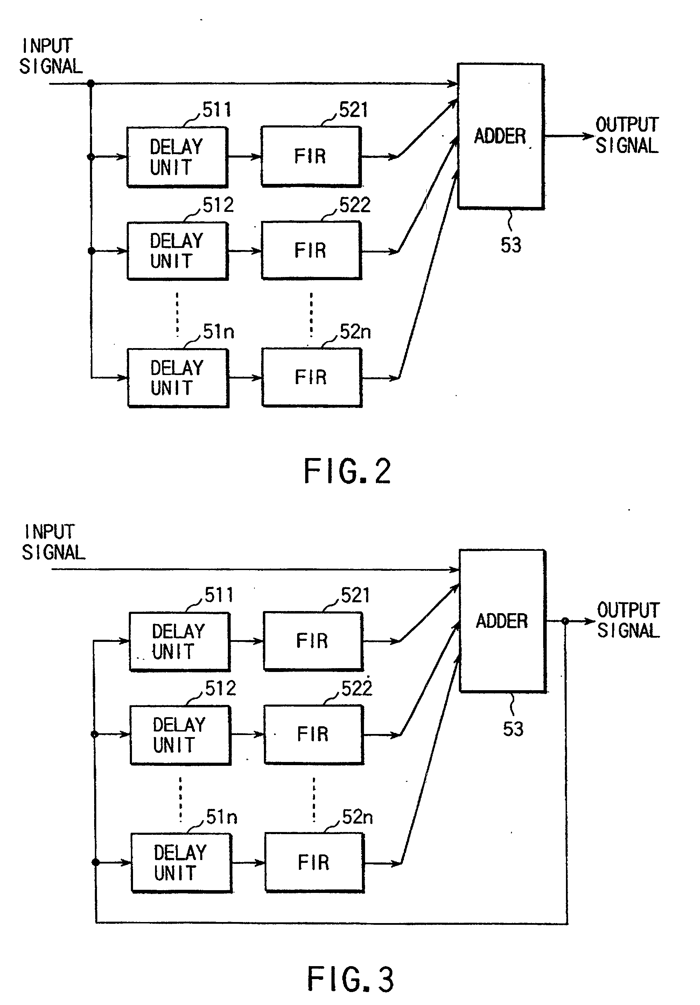

This compensator 5 is composed of, for example, FIR (Finite Impulse Response) filter. In this case, the delay time component corresponds to the tap number of FIR filter, and the amplitude and phase compensation component corresponds to the tap coefficient of FIR filter. A specific constitution is shown in FIG. 2. In this constitution, the input is distributed into n+1 lines, and the signals of the first to the n-th line excluding the main line are delayed by a specified time each by n delay units 511 to 51n (in the first line, the delay amount may be 0), and the delay signals are filtered by FIR filters 521 to 52n, and the signals of the main line and first to n-th line are added and synthesized in an adder 53.

That is, the compensator 5 in this constitution extracts a time region relatively large in the amplitude and phase compensation component. This time region large in the amplitude and phase compensation component is compensated by the FIR filter. In this case, as for the circulating signals long in delay, by combination of delay unit and FIR filter, the circuit scale of the FIR filter can be reduced. In the case of the time region relatively small in the amplitude and phase compensation component, meanwhile, it may be realized by the delay unit only.

The digital baseband OFDM signal after compensation is transformed into a digital IF signal by a quadrature modulation circuit 6. The digital IF signal output from the quadrature modulation circuit 6 is converted into an analog signal by a DA (digital/analog) converter 7, and is transformed into an RF signal in an up-converter 8 to be an output of the repeater.

In the compensation amount detector 4 in FIG. 1, the operation in the presence of coupling wave interference is explained.

Supposing the desired wave to be s(t), the repeater output to be u(t), and the frequency characteristic of the circulating transmission path to be f, the input of the compensation amount detector 4 is expressed as follows:

$$s(t) + f \times u(t)$$

Expressing the complex conjugates of s(t) and u(t) as s*(t) and u*(t), the autocorrelation for detection of compensation amount is expressed as follows:

$$(s(t) + f \times u(t)) \times (s^*(t) + f \times u^*(t))$$

$$= s(t) \times s^*(t) + f^2 \times u(t) \times u^*(t)$$

$$+ f \times (s(t) \times u^*(t) + s^*(t) \times u(t))$$

By subtracting this autocorrelation result and the known autocorrelation waveform after matching the scale, and deleting the desired wave component of the first term, the transmission path distortion and frequency characteristic by circulating expressed in the second term and after are obtained. By compensating this frequency characteristic by the compensator 5, the desired wave component can be extracted accurately.

Therefore, the OFDM transmission signal repeater according to this constitution can detect the transmission path distortion from the transmitter and the circulating component of transmission wave of the own device accurately, and by simple adjustment, the transmission path characteristic and circulating characteristic varying with the season, weather and time can be compensated adaptively.

The compensator 5 shown in FIG. 2 is composed in feed-forward loop, but, as shown in FIG. 3, it may be also formed in feed-backward loop. In FIG. 3, the same parts as in FIG. 2 are identified with same reference numerals, and the description is omitted.

(Second Embodiment)

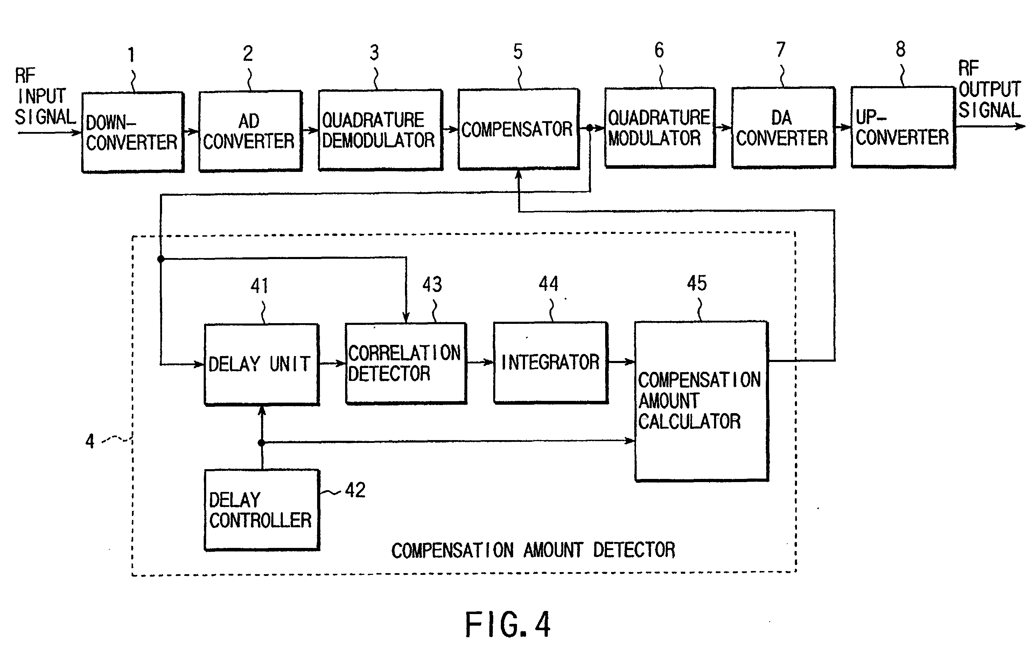

FIG. 4 shows a constitution of a second embodiment of OFDM transmission signal repeater of the present invention. In FIG. 4, the same parts as in FIG. 1 are identified with same reference numerals, only the different parts are described below.

What the repeater shown in FIG. 4 differs from the device shown in FIG. 1 is that the input of the compensation amount detector 4 is obtained from the output of the compensator 5. That is, the repeater in FIG. 1 processes by feed-forward operation, while the repeater in FIG. 4 processes by feed-backward operation. By this difference in constitution, the constitution in FIG. 1 is advantageous in the aspect of response speed, while the constitution in FIG. 4 is beneficial in the aspect of compensation precision.

In the compensation amount detector 4 in FIG. 4, the operation in the presence of circulating interference is described below.

Supposing the desired wave to be s(t), the repeater output to be u(t), the frequency characteristic of the circulating transmission path to be f, and the frequency characteristic of the compensator 5 to be f', the input of the compensation amount detector 4 is expressed as follows:

$$s(t) + f \times u(t) - f' \times u(t)$$

Expressing the complex conjugates of s(t) and u(t) as s*(t) and u*(t), the autocorrelation for detection of compensation amount is expressed as follows:

$$(s(t) + f \times u(t) - f' \times u(t) \times (s^*(t) + f \times$$

$$u^*(t) - f' \times u^*(t)$$

$$= s(t) \times s^*(t) + (f - f')^2 \times u(t) \times u^*(t)$$

$$+ (f - f') \times (s(t) \times u^*(t) + s^*(t) \times u(t))$$

By subtracting this autocorrelation result and the known autocorrelation waveform after matching the scale, and deleting the desired wave component of the first term, the error of the transmission path distortion or frequency characteristic by circulating expressed in the second term and after and the frequency characteristic of the compensator 5 is obtained. By compensating the frequency characteristic obtained by accumulating the error components of this frequency characteristic by the compensator 5, the desired wave component can be extracted accurately.

In the foregoing embodiments, all operation in the repeater is digital signal processing, but, the compensator may be realized by analog signal processing, and only the inside of the compensation amount detector 4 may be operated by digital signal processing.

(Third Embodiment)

A further specific embodiment of an OFDM transmission signal repeater is described below.

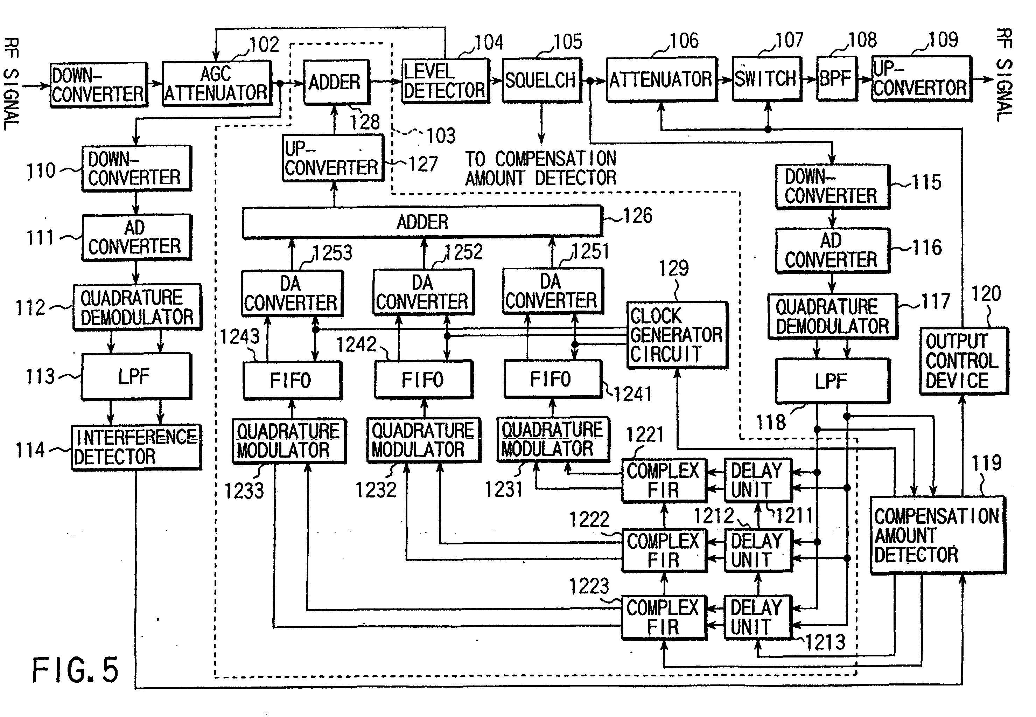

FIG. 5 shows a basic constitution of the embodiment. In FIG. 5, a radio frequency (RF) band OFDM signal from a reception antenna (not shown) is converted in frequency from RF band to intermediate frequency (IF) band by a down-converter 101 to be an IF signal. This IF signal is adjusted in gain to a specific level by an AGC (automatic gain control) attenuator 102, and is output after interference cancellation treatment in a compensator 103. This compensator 103 has plural systems of processing circuit to cope with plural undesired waves. For the simplicity of explanation, herein, the number of undesired waves that can be handled is supposed to be three.

The output of the compensator 103 is applied in a level detector 104, and the level for AGC is detected, and presence or absence of signal is confirmed in a squelch 105, and undesired waves outside of the transmission band are removed by a band pass filter (BPF) 108 through an attenuator 106 for output level adjustment and a switch 107 for emergency cut-off, and the frequency is converted into the RF band in an up-converter 109, and a repeater output is obtained. The signal detection result of the squelch 105 is output to a compensation amount detector 119 described later.

Herein, the band pass filter 108 has a function of delaying the delay time of circulating signal to make it easier to detect undesired waves, aside from the original function of compressing the radiation outside of the band.

The IF output of the AGC attenuator 102 is converted in frequency into baseband by a down-converter 110, and converted into digital signal by an AD converter 111, and is further transformed into baseband OFDM signal of complex type by a quadrature demodulation circuit 112. The complex output of the quadrature demodulation circuit 112 is supplied into a low pass filter (LPF) 113, and undesired noise components are removed, and the rest is supplied into an interference detector 114.

The interference detector 114 detects the delay time of undesired wave due to multipath or circulating transmission wave by detecting the correlation over the entire time region about the input OFDM signals, and the detected undesired wave information (delay time) is sent into the compensation amount detector 119.

The output of the squelch 105 is converted in frequency into baseband by a down-converter 115, and converted into digital signal by an AD converter 116, and is further transformed into baseband OFDM signal of complex type by a quadrature demodulation circuit 117. The complex output of the quadrature demodulation circuit 117 is supplied into a low pass filter (LPF) 118, and undesired noise components are removed, and the rest is supplied into the compensation amount detector 119, and is simultaneously supplied into the compensator 103.

The compensation amount detector 119 detects the correlation about the complex baseband OFDM signal near the detection timing on the basis of the undesired wave detection information from the undesired wave detector 114, integrates to determine the amplitude and phase characteristic, and calculates the compensation amount of position, amplitude, and phase (angle) of the undesired wave as compared with the reference signal from its reverse characteristic. This operation result of compensation is supplied in the compensator 103.

Herein, the compensation amount detector 119, if receiving information of no signal from the squelch 105, stops processing action in order to avoid unnecessary process. If the operation result of compensation is an abnormal value exceeding the specified values, a failure detection signal is sent to an output controller 120. At this time, the output controller 120 lowers the gain of the attenuator 106 until failure signal is no longer sent from the compensation amount detector 119, and if abnormality is still detected, the switch 107 is turned off to cut off the transmission output of the repeater.

The compensator 103 is specifically constituted as shown in FIG. 5. In FIG. 5, the complex baseband OFDM signal given from the LPF 118 is distributed in three systems, and complex outputs are modulated in quadrature modulation circuits 1231 to 1233 respectively through delay units 1211 to 1213 and complex FIR filters 1221 to 1223. Herein, the delay amounts of the delay units 1211 to 1213 and the coefficients of the complex FIR filters 1221 to 1223 are set depending on the compensation signal from the compensation amount detector 119.

The outputs of the quadrature modulation circuits 1231 to 1233 are fed into DA converters 1251 to 1253 through FIFO memories 1241 to 1243, and converted into analog signals, and summed up in an adder 126, and the sum is converted in frequency to IF band by an up-converter 127, and is combined with the output of the AGC attenuator 102 by an adder 128 provided in the main system.

The reading clocks of the FIFO memories 1241 to 1243 and the sampling clocks of the DA converters 1251 to 1253 are generated in a clock generator 129, and this clock generator 129 adjusts the clock frequency finely depending on the compensation signal from the compensation amount detector 119. Accordingly, the delay amount not completely absorbed by the delay units 1211 to 1213 can be adjusted finely.

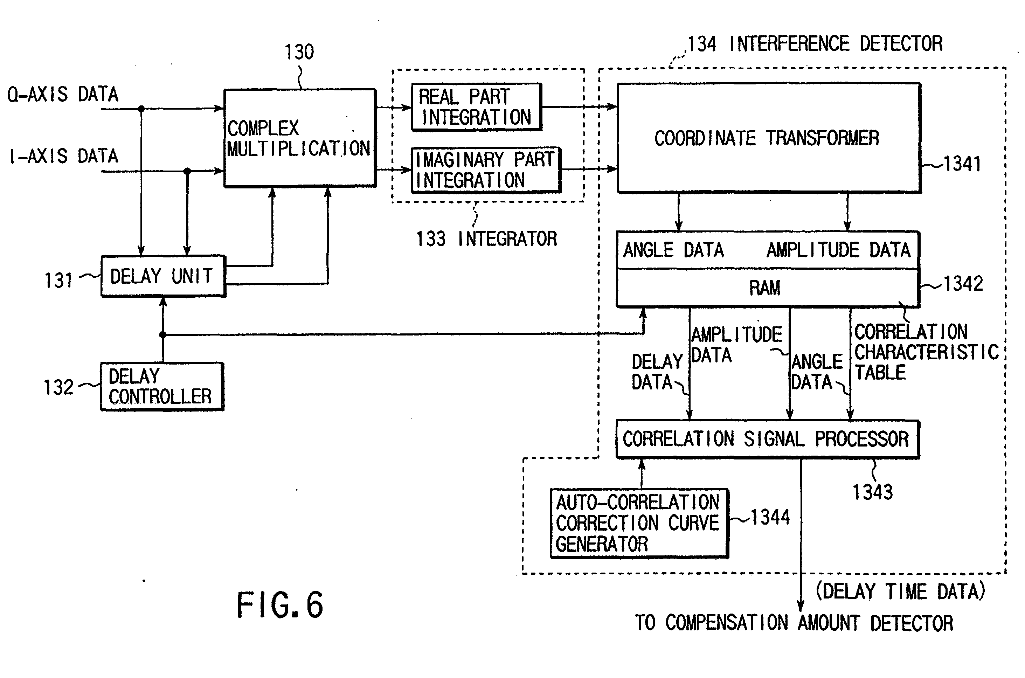

A specific constitution of the interference detector 114 is shown in FIG. 6. In FIG. 6, the I-axis data and Q-axis data of baseband are supplied into a complex multiplier 130 and is multiplied in complex with the complex conjugate of the I-axis data and Q-axis data properly delayed by a delay unit 131. This complex multiplication output is integrally separately in an integrator 133 by dividing into real part and imaginary part, and the autocorrelation detection signal is supplied into an interference detector 134. The delay amount of the delay unit 131 is swept over the entire interference detection region by the delay time control signal from a delay controller 132.

The interference detector 134 feeds the signal from the integrator 133 into a coordinate transformer 1341, and detects the angle and amplitude. The angle data and amplitude data detected in the coordinate transformer 1341 are sent into a correlation characteristic table 1342. The correlation characteristic table 1342, using RAM, stores the amplitude data and angle data from the coordinate transformer 1341 in correspondence with the delay time control signal from the delay controller 132. The delay data, amplitude data, and angle data stored in the correlation characteristic table 1342 are supplied properly into a correlation signal processor 1343. The correlation signal processor 1343 determines the delay time data corresponding to the input data on the basis of the autocorrelation correction curve generated in an autocorrelation correction curve generator 1344, and the delay time data is issued to the compensation amount detector 119 as undesired wave detection information.

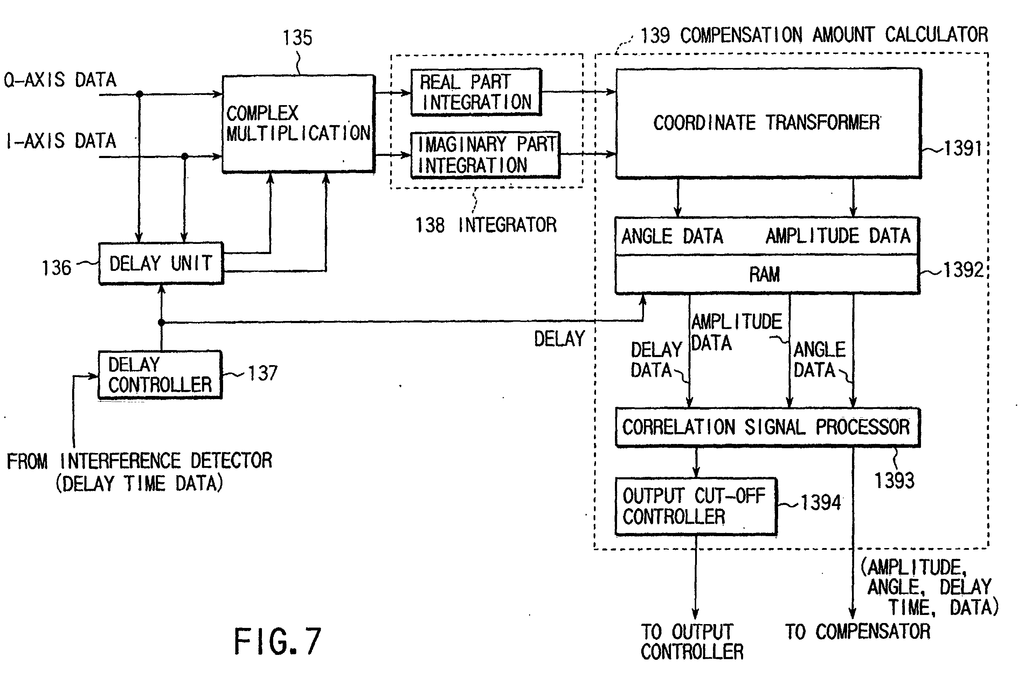

A specific constitution of the compensation amount detector 119 is shown in FIG. 7. In FIG. 7, the I-axis data and Q-axis data of baseband are supplied into a complex multiplier 135, and multiplied in complex with the complex conjugate of the I-axis data and Q-axis data properly delayed by a delay unit 136. This complex multiplication output is integrally separately in an integrator 138 by dividing into real part and imaginary part, and the autocorrelation detection signal is supplied into a compensation amount operator 139. The delay amount of the delay unit 136 is swept by a delay controller 137, but the delay controller 137 controls the delay amount in the vicinity on the basis of the delay time data given from the interference detector 114.

The compensation amount operator 139 feeds the signal from the integrator 138 into a coordinate transformer 1391, and detects the angle and amplitude. The angle data and amplitude data detected in the coordinate transformer 1391 are sent into a correlation characteristic table 1392. The correlation characteristic table 1392, using RAM, stores the amplitude data and angle data from the coordinate transformer 1391 in correspondence with the delay time control signal from the delay controller 137. The delay data, amplitude data, and angle data stored in the correlation characteristic table 1392 are supplied properly into the correlation signal processor 1343. The correlation signal processor 1343 determines the data of amplitude, angle, and delay time corresponding to the input data, and outputs to the compensator 103, and when abnormal value is shown, an output cut-off control signal is generated and output to the output controller 120.

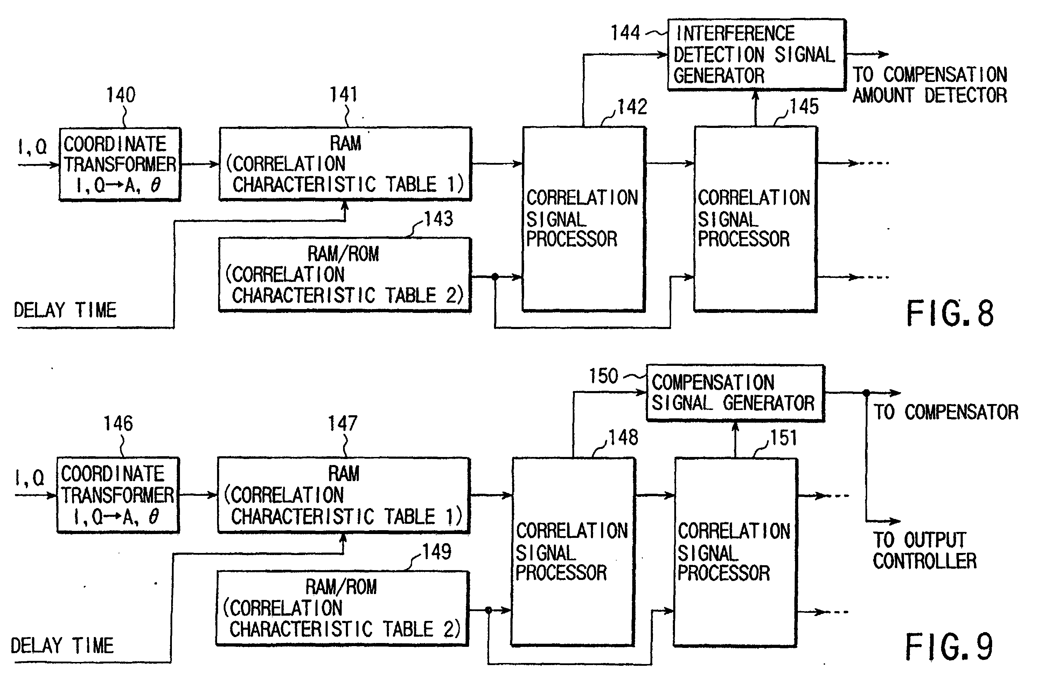

The interference detector 134 may be also constituted as shown in FIG. 8. This interference detector 134 is composed of a coordinate transformer 140, a RAM 141 for composing a correlation characteristic table 1, a correlation signal processor 142, a RAM or ROM 143 for composing a correlation characteristic table 2, an interference detection signal generator 144, and a correlation signal processor 145, and receives I and Q signals.

That is, the I and Q signals input into the interference detector 134 are supplied into the coordinate transformer 140. The coordinate transformer 140 is intended to transform the I and Q signals expressed in the quadrature coordinates into amplitude and angle signals (A, θ) expressed in the polar coordinates, and the output of the coordinate transformer 140 is supplied into the RAM 141. In the RAM 141, the output of the coordinate transformer 140 is written, using the delay time as the address, and the correlation characteristic detected from the input signal is described. In the RAM or ROM 143, using the delay time as the address, the specific correlation characteristic determined by the frequency component of the transmission signal is described.

The correlation signal processor 142 receives the output of the correlation characteristic table 1 (RAM 141) and output of correlation characteristic table 2 (RAM or ROM 143), detects the correlation amplitude maximum value of the output of the correlation characteristic table 1, and determines the amplitude, angle and delay time at this time and sends to the interference detection signal generator 144. By removing the output of the correlation characteristic table 2 from the output of the correlation characteristic table 1, only the correlation components caused by multipath or circulating are extracted, and output to the next correlation signal processor 145.

This correlation signal processor 145 receives the output of the correlation signal processor 142 and the output of the correlation characteristic table 2, detects the correlation amplitude maximum value of the output of the correlation signal processor 142, and determines the amplitude, angle and delay time at this time and sends to the interference detection signal generator 144. By removing the output of the correlation characteristic table 2 from the output of the correlation signal processor 142, only the correlation components caused by multipath small in amplitude or circulating are extracted, and sent to the next correlation signal processor (not shown).

The interference detection signal generator 144 sends the delay time to the compensation amount operator 119, out of the amplitude, angle and delay time issued from the correlation signal processors 142, 145.

By repeating this correlation signal processing procedure, the autocorrelation components contained in the output of the correlation characteristic table 1 are removed sequentially from the larger amplitude, and therefore it is easier to detect smaller components, and the precision of detection is enhanced.

In FIG. 8, the correlation signal processor is composed in two stages, and the interference detection of higher precision is possible by increasing the number of stages.

In this example, the specific correlation characteristic determined by the frequency component of the transmission signal is described in the RAM or ROM 143, but similar effects are obtained by describing preliminarily the correlation characteristic detected from the input signal in the situation free from circulating.

The compensation amount operator 139 may be constituted also as shown in FIG. 9. This compensation amount operator 139 is composed of a coordinate transformer 146, a RAM 147 for composing a correlation characteristic table 1, a correlation signal processor 148, a RAM or ROM 149 for composing a correlation ' characteristic table 2, a compensation signal generator 150, and a correlation signal processor 151, and receives I and Q signals.

That is, the I and Q signals fed into the compensation amount operator 139 are supplied into the coordinate transformer 146. The coordinate transformer 146 is intended to transform the I and Q signals expressed in the quadrature coordinates into amplitude and angle signals (A, θ) expressed in the polar coordinates, and the output of the coordinate transformer 146 is supplied into the RAM 147. In the RAM 147, the output of the coordinate transformer 146 is written, using the delay time as the address, and the correlation characteristic detected from the input signal is described. In the RAM or ROM 149, using the delay time as the address, the specific correlation characteristic determined by the frequency component of the transmission signal is described.

The correlation signal processor 148 receives the output of the correlation characteristic table 1 (RAM 147) and output of correlation characteristic table 2 (RAM or ROM 149), detects the correlation amplitude maximum value of the output of the correlation characteristic table 1, and determines the amplitude, angle and delay time at this time and outputs to the compensation signal generator 150. By removing the output of the correlation characteristic table 2 from the output of the correlation characteristic table 1, only the correlation components caused by multipath or circulating are extracted, and output to the next correlation signal processor 151.

This correlation signal processor 151 receives the output of the correlation signal processor 148 and the output of the correlation characteristic table 2, detects the correlation amplitude maximum value of the output of the correlation signal processor 148, and determines the amplitude, angle and delay time at this time and outputs to the compensation signal generator 150. By removing the output of the correlation characteristic table 2 from the output of the correlation signal processor 148, only the correlation components caused by multipath small in amplitude or circulating are extracted, and sent to the next correlation signal processor (not shown).

The compensation signal generator 150 determines the circulation of the transmission signal or the amplitude phase characteristic of the multipath from the amplitude, angle and delay time issued from the correlation signal processors 148 and 151. The generator 150 generates a compensation signal expressing its reverse characteristic, and sends it to the compensator 103 and also to the output controller 120.

By repeating this correlation signal processing procedure, the autocorrelation components contained in the output of the correlation characteristic table 1 are removed sequentially from the larger amplitude, and therefore it is easier to detect smaller components, and the precision of detection is enhanced. In FIG. 9, the correlation signal processor is composed in two stages, and the compensation amount detection of higher precision is possible by increasing the number of stages.

According to the constitution, the undesired wave is detected by the interference detector 114 at the input side, and its delay time is determined, and the compensation amount in the vicinity is operated on the basis of the interference detection result in the compensation amount detector 119 at the output end, and the compensator is fed back, so that compensation of higher precision is possible. In particular, for detection of interference, since the presence or absence of undesired wave due to circulating or multipath and the undesired wave level are always monitored by the autocorrelation detection, it can be detected and compensated immediately in the event of occurrence of undesired wave.

In this example, the specific correlation characteristic determined by the frequency component of the transmission signal is described in the RAM or ROM 149, but similar effects are obtained by describing preliminarily the correlation characteristic detected from the input signal in the situation free from circulating.

The circuit configuration of the compensation amount operator 139 shown in FIG. 9 can be also applied in the compensation amount operator 45 shown in FIGS. 1 and 4.

(Other Embodiments)

In the first and second embodiments, same as in the third embodiment, it is more effective by installing a band limiting filter for suppressing the frequency components outside of the transmission band from the relay output at the output stage of the repeater. In this constitution, since the radiation outside of the band is suppressed, effects on the neighboring transmission bands can be decreased, and moreover since the delay time of the circulating signal is extended by the filter, the undesired wave can be detected easily by the compensation amount detector 4.

In the compensation processing unit (a set of compensator and compensation amount detector) in the foregoing embodiments, when interference components due to multipath or circulating increase, it is hard to remove all of these components. Further, if undesired wave components due to circulating are large, the undesired wave components will not be completely compensated for and will remain unremoved. Accordingly, the compensation processing unit is composed of plural stages connected in cascade. In such constitution, since undesired wave components are removed repeatedly in plural stages of compensation processing unit, and the undesired wave components can be removed more securely. Moreover, since the delay amount of circulating can be increased, the detection precision of undesired wave can be further enhanced.

The compensation processing unit in the embodiments acts effectively also on the multipath, as well as on circulating of transmission wave. When applied in the OFDM transmission signal receiver, therefore, effects of multipath can be lessened regardless of the guard period added to the OFDM signal.

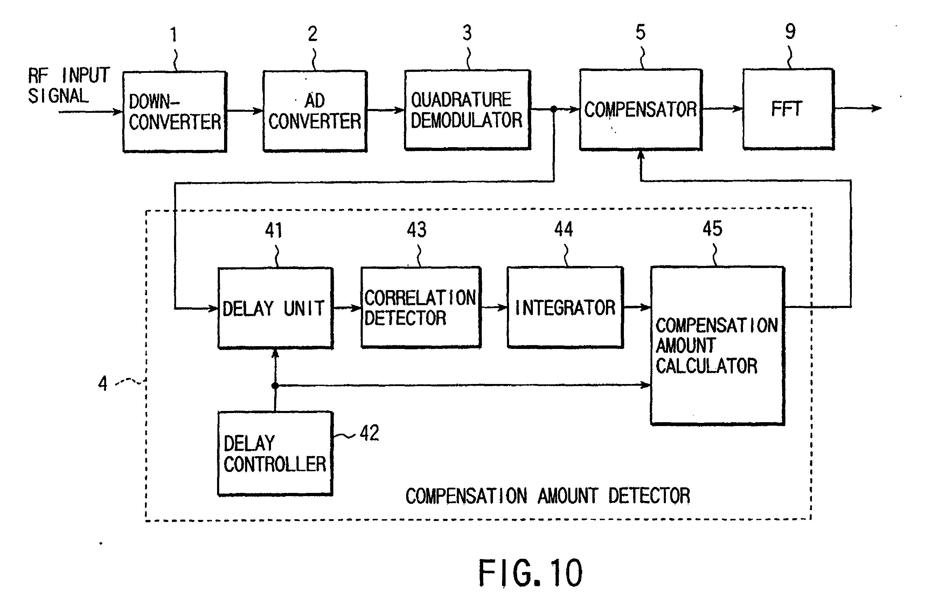

FIG. 10, FIG. 11, and FIG. 12 show constitutions of OFDM transmission signal receivers making use of the compensation processing unit of the OFDM transmission signal repeaters shown in FIG. 1, FIG. 4, and FIG. 5, respectively. In FIG. 10, FIG. 11, and FIG. 12, the same parts as in FIG. 1, FIG. 4, and FIG. 5 are identified with same reference numerals, and their description is omitted.

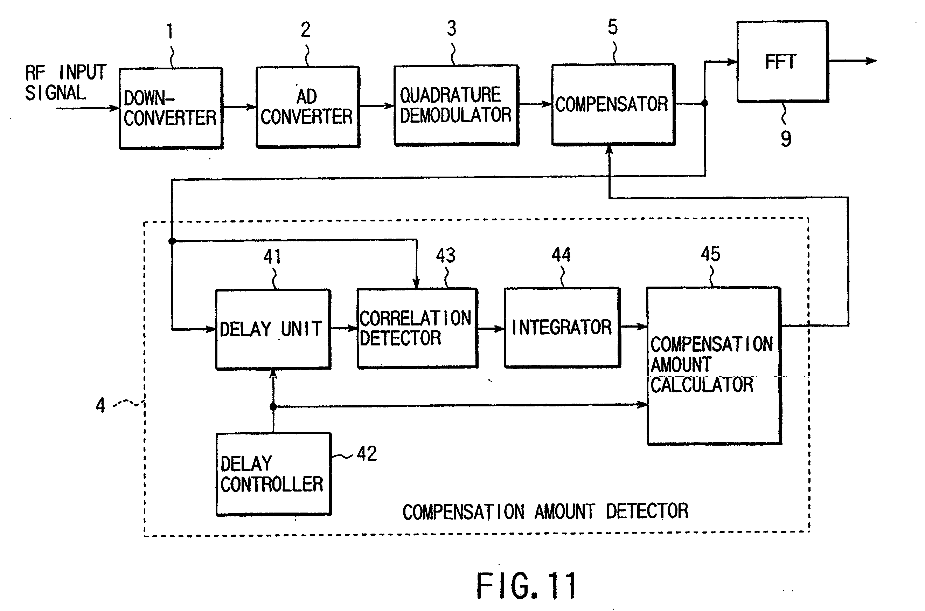

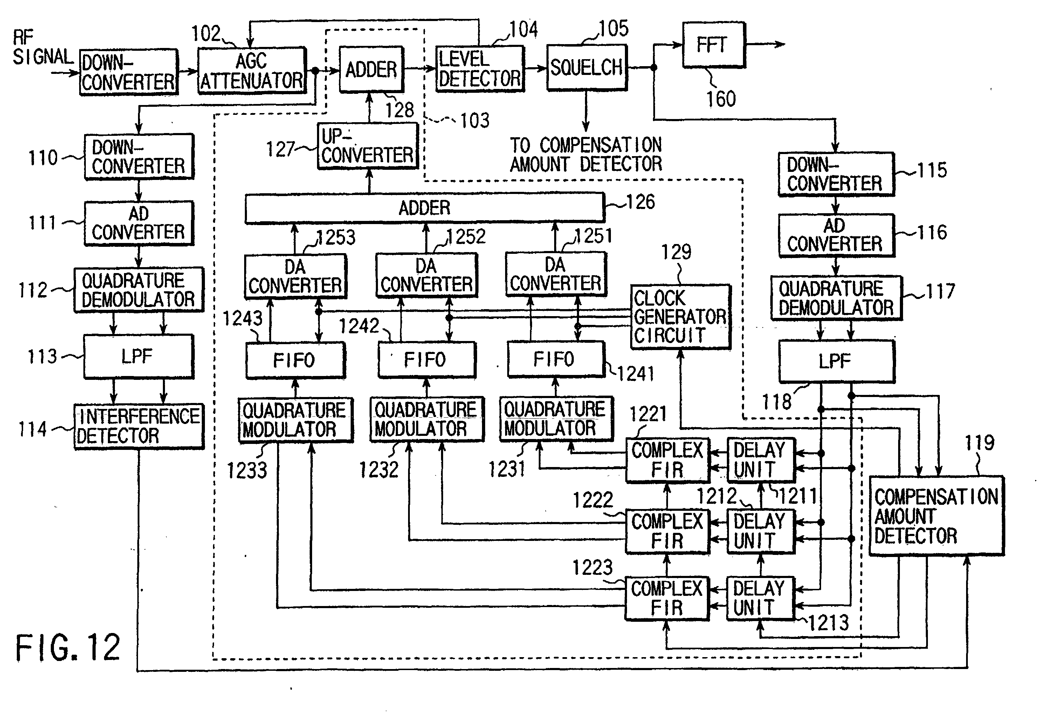

The OFDM transmission signal receivers shown in FIG. 10 and FIG. 11 are designed to receive the output of the compensator 5 shown in FIG. 1 and FIG. 4 as OFDM reception signal, and supply into the FFT circuit 9 in the demodulation system. The OFDM transmission signal receiver shown in FIG. 12 is intended to receive the output of the squelch circuit 105 shown in FIG. 5 as OFDM reception signal, and supply into the FFT circuit 160 in the demodulation system.

Herein, in the case of multiplex transmission of data by OFDM signal, a technique of adding a guard period to the effective symbol period and reducing the multipath occurring in the guard period is known, but in the constitution of the embodiments, it is possible to remove undesired wave components due to multipath, not limited to the guard period, so that it acts effectively on the multipath delayed more than the' guard period.

Thus the present invention presents the OFDM transmission signal repeater and OFDM transmission signal receiver capable of adjusting easily and adaptively compensating the transmission path characteristic varying with the season, weather or time.

**Claims**

1. An OFDM, orthogonal frequency division multiplex, transmission signal repeater including receiving means (110 to 112) for receiving OFDM transmission signals, and transmitting means (106 to 109) for retransmitting the OFDM transmission signals received by these means at the same frequency, comprising:

    compensating means (103) for receiving the reception signals obtained by the receiving means, compensating the amplitude and phase characteristic of the reception signals on the basis of a given compensation amount, removing undesired wave components due to circulating and multipath, and sending the rest to the transmitting means,
    autocorrelation operating means (130 to 133) for delaying the reception signals obtained by the receiving means sequentially by a specified time, and detecting the correlation before and after the delay,
    interference detecting means (134; 140 to 145) for determining the delay time of the undesired wave as compared with a principal wave in the reception signals from the relation between the correlation detection signal and delay time obtained by the autocorrelation operating means (130 to 133), and
    compensation amount operating means (119) for determining the amplitude and phase characteristic of the undesired waves contained in the reception signals from the output of the compensating means (103) on the basis of the delay time of the undesired waves obtained by the interference detecting means (134; 140 to 145), and determining the compensation amount to be given to the compensating means (103) from its reverse characteristic, and wherein the interference detecting means (140 to 145) includes correlation characteristic holding means (141) for holding the correlation characteristic detected preliminarily, either by the frequency of the OFDM transmission signals or, from the input signal in a situation free from circulating, and includes correlation signal processing means (142) for detecting the interference component contained in the input signal and with smaller level than the components removed by the compensating means (103), by removing the components of correlation characteristic held by the correlation characteristic holding means (141) from the correlation characteristic detected by the autocorrelation operating means (130 to 133), or from the input signal, respectively.

2. An OFDM transmission signal repeater according to Claim 1, **characterized by** further comprising signal component detecting means (105) for detecting whether or not the signal component is contained in the reception signal of the OFDM transmission signal,

    wherein the compensation process of the compensating means is arranged to stop when this means (105) detects that the signal component is not so contained.

3. An OFDM transmission signal repeater according to Claim 1, **characterized in that** the compensation amount operating means (139) includes failure detecting means (1394) for detecting abnormality of input signal, further comprising:

    output control means (106, 107, 120) for attenuating or cutting off the relay output when abnormality is detected by this means (1394).

4. An OFDM transmission signal repeater according to Claim 1, **characterized by** further comprising:

    a band limiting filter for suppressing the components outside of the band from a re-transmission signal when generating the retransmission signal from the signal obtained from the compensating means.

5. An OFDM, orthogonal frequency division multiplex, transmission signal receiver including receiving means (110 to 112) for receiving OFDM transmission signals, and demodulating means (160) for demodulating the transmission signals multiplexed by FFT treatment of the reception signals obtained by the receiving means (110 to 112), comprising:

    compensating means (103) for receiving the reception signals obtained by the receiving means, compensating the amplitude and phase characteristic of the reception signals on the basis of a given compensation amount, removing undesired wave components due to circulating and multipath, and sending the rest to the demodulating means,

autocorrelation operating means (130 to 133) for delaying the reception signals obtained by the receiving means sequentially by a specified time, and detecting the correlation before and after the delay, interference detecting means (134; 140 to 145) for determining the delay time of the undesired wave as compared with a principal wave in the reception signals from the relation between the correlation detection signal and delay time obtained by the autocorrelation operating means (130 to 133), and

compensation amount operating means (119) for determining the amplitude and phase characteristic of the undesired waves contained in the reception signals from the output of the compensating means (103) on the basis of the delay time of the undesired waves obtained by the interference detecting means (134, 140 to 145), and determining the compensation amount to be given to the compensating means (103) from its reverse characteristic, and wherein the interference detecting means (140 to 145) includes correlation characteristic holding means (141) for holding the correlation characteristic detected preliminarily, either by the frequency of the OFDM transmission signals or, from the input signal in a situation free from circulating, and includes correlation signal processing means (142) for detecting the interference component contained in the input signal and with smaller level than the components removed by the compensating means (103), by removing the components of correlation characteristic held by the correlation characteristic holding means (141) from the correlation characteristic detected by the autocorrelation operating means (130 to 133), or from the input signal, respectively.

6. An OFDM transmission signal receiver according to Claim 5, **characterized by** further comprising signal component. detecting means (105) for detecting whether or not the signal component is contained in the reception signal of the OFDM transmission signal,

wherein the compensation process of the compensating means is arranged to stop when this means (105) detects that the signal component is not so contained.

**Patentansprüche**

1. OFDM-, Orthogonal-Frequenz-Multiplex-, Sendesignal-Repeater einschließlich Empfangsmitteln (110 bis 112) zum Empfangen von OFDM-Sendesignalen und Sendemitteln (106 bis 109) zum erneuten Senden der OFDM-Sendesignale, die durch diese Mittel bei der gleichen Frequenz empfangen werden, umfassend:

Kompensationsmittel (103) zum Empfangen der Empfangssignale, die durch das Empfangsmittel erhalten werden, Kompensieren der Amplituden- und Phasencharakteristik der Empfangssignale auf der Basis einer gegebenen Kompensationsmenge, Entfernen unerwünschter Wellenkomponenten wegen Zirkulieren und Mehrweg und Senden des Rests an das Sendemittel,

Autokorrelations-Operationsmittel (130 bis 133) zum Verzögern der Empfangssignale, die durch das Empfangsmittel erhalten werden, sequenziell um eine spezifizierte Zeit und Erfassen der Korrelation vor und nach der Verzögerung,

Interferenz-Erfassungsmittel (134; 140 bis 145) zum Bestimmen der Verzögerungszeit der unerwünschten Welle im Vergleich zu einer Hauptwelle in den Empfangsignalen von der Beziehung zwischen dem Korrelationserfassungssignal und einer Verzögerungszeit, erhalten durch das Autokorrelations-Operationsmittel (130 bis 133), und

Kompensationsmengen-Operationsmittel (119) zum Bestimmen der Amplituden- und Phasencharakteristik der unerwünschten Wellen, die in den Empfangssignalen enthalten sind, aus der Ausgabe des Kompensationsmittels (103) auf der Basis der Verzögerungszeit der unerwünschten Wellen, erhalten durch das Interferenz-Erfassungsmittel (134; 140 bis 145), und Bestimmen der Kompensationsmenge, die dem Kompensationsmittel (103) zu geben ist, aus ihrer Umkehrcharakteristik, und wobei das Interferenz-Erfassungsmittel (140 bis 145) umfasst Korrelationscharakteristik-Haltemittel (141) zum Halten der Korrelationscharakteristik, die vorausgehend erfasst wird, entweder durch die Frequenz der OFDM-Sendesignale oder von dem Eingangsignal in einer Situation, die frei vom Zirkulieren ist, und umfasst Korrelationssignal-Bearbeitungsmittel (142) zum Erfassen der Interferenzkomponente, die in dem Eingangssignal enthalten ist und mit einem kleineren Pegel als die Komponenten, die durch das Kompensationsmittel (103) entfernt werden, durch jeweiliges Entfernen der Komponenten einer Korrelationscharakteristik, die durch das Korrelationscharakteristik-Haltemittel (141) gehalten wird, aus der Korrelationscharakteristik, die durch das Autokorrelations-Operationsmittel (130 bis 133) erfasst wird, oder aus dem Eingangssignal.

2. OFDM-Sendesignal-Repeater nach Anspruch 1, ferner **gekennzeichnet durch** Umfassen eines Signalkomponenten-Erfassungsmittels (105) zum Erfassen, ob die Signalkomponente in dem Empfangsignal des OFDM-Sendesignals enthalten ist oder nicht,
wobei der Kompensationsprozess des Kompensationsmittels angeordnet ist zu stoppen, wenn dieses Mittel (105) erfasst, dass die Signalkomponente nicht so enthalten ist.

3. OFDM-Sendesignal-Repeater nach Anspruch 1, **gekennzeichnet dadurch, dass** das Kompensationsmengen-Operationsmittel (139) Fehlererfassungsmittel (1394) zum Erfassen einer Anomalie eines Eingangssignals umfasst, ferner umfassend:

    Ausgangssteuermittel (106, 107, 120) zum Dämpfen oder Abstellen der Relaisausgabe, wenn durch dieses Mittel (1394) eine Anomalie erfasst wird.

4. OFDM-Sendesignal-Repeater nach Anspruch 1, ferner **gekennzeichnet durch** Umfassen:

    eines Bandbegrenzungsfilters zum Unterdrücken der Komponenten außerhalb des Bands von einem Rückübertragungssignal, wenn das Rückübertragungssignal von dem Signal generiert wird, das von dem Kompensationsmittel erhalten wird.

5. OFDM-, Orthogonal-Frequenz-Multiplex-, Sendesignal-Empfänger einschließlich Empfangsmitteln (110 bis 112) zum Empfangen von OFDM-Sendesignalen und Demodulationsmittel (160) zum Demodulieren der Sendesignale, die durch FFT-Behandlung der Empfangsignale multiplext werden, die durch die Empfangsmittel (110 bis 112) erhalten werden, umfassend:

    Kompensationsmittel (103) zum Empfangen der Empfangsignale, die durch das Empfangsmittel erhalten werden, Kompensieren der Amplituden- und Phasencharakteristik der Empfangssignale auf der Basis einer gegebenen Kompensationsmenge, Entfernen unerwünschter Wellenkomponenten wegen Zirkulieren und Mehrweg und Senden des Rests zu dem Demodulationsmittel,

    Autokorrelations-Operationsmittel (130 bis 133) zum Verzögern der Empfangssignale, die durch das Empfangsmittel erhalten werden, sequenziell um eine spezifizierte Zeit und Erfassen der Korrelation vor und nach der Verzögerung, Interferenz-Erfassungsmittel (134; 140 bis 145) zum Bestimmen der Verzögerungszeit der unerwünschten Welle im Vergleich zu einer Hauptwelle in den Empfangsignalen von der Beziehung zwischen dem Korrelationserfassungssignal und einer Verzögerungszeit, erhalten durch das Autokorrelations-Operationsmittel (130 bis 133), und

Kompensationsmengen-Operationsmittel (119) zum Bestimmen der Amplituden- und Phasencharakteristik der unerwünschten Wellen, die in den Empfangsignalen enthalten sind, aus der Ausgabe des Kompensationsmittels (103) auf der Basis der Verzögerungszeit der unerwünschten Wellen, erhalten durch das Interferenz-Erfassungsmittel (134, 140 bis 145), und Bestimmen der Kompensationsmenge, die dem Kompensationsmittel (103) zu geben ist, aus ihrer Umkehrcharakteristik, und wobei das Interferenz-Erfassungsmittel (140 bis 145) umfasst Korrelationscharakteristik-Haltemittel (141) zum Halten der Korrelationscharakteristik, die vorausgehend erfasst wird, entweder durch die Frequenz der OFDM-Sendesignale oder aus dem Eingangssignal in einer Situation, die frei vom Zirkulieren ist, und umfasst Korrelationssignal-Bearbeitungsmittel (142) zum Erfassen der Interferenzkomponente, die in dem Eingangssignal enthalten ist und mit einem kleineren Pegel als die Komponenten, die durch das Kompensationsmittel (103) entfernt werden, durch jeweiliges Entfernen der Komponenten einer Korrelationscharakteristik, die durch das Korrelationscharakteristik-Haltemittel (141) gehalten wird, aus der Korrelationscharakteristik, die durch die Autokorrelations-Operationsmittel (130 bis 133) erfasst wird, oder aus dem Eingangssignal.

6. OFDM-Sendesignal-Empfänger nach Anspruch 5, ferner **gekennzeichnet durch** ferneres Umfassen eines Signalkomponenten-Erfassungsmittels (105) zum Erfassen, ob die Signalkomponente in dem Empfangsignal des OFDM-Sendesignals enthalten ist oder nicht,
wobei der Kompensationsprozess des Kompensationsmittels angeordnet ist zu stoppen, wenn dieses Mittel (105) erfasst, dass die Signalkomponente nicht so enthalten ist.

**Revendications**

1. Répéteur de signaux de transmission MDFO, c'est-à-dire à multiplexage par répartition en fréquence orthogonale, incluant des moyens de réception (110 à 112) pour recevoir des signaux de transmission MDFO, et des moyens d'émission (106 à 109) pour retransmettre les signaux d'émission MDFO reçus par ces moyens à la même fréquence, comprenant :

des moyens de compensation (103) pour recevoir les signaux de réception délivrés par les moyens de réception, compenser la caractéristique d'amplitude et de phase des signaux de réception sur la base d'une quantité de compensation donnée, éliminer des composantes d'ondes indésirables dues à la circulation et aux trajets multiples, et envoyer le reste aux moyens d'émission,

des moyens d'exécution d'autocorrélation (130 à 133) pour retarder séquentiellement, d'une durée spécifiée, des signaux de réception fournis par les moyens de réception, et détecter la corrélation avant et après le retard,

des moyens (134;140 à 145) de détection d'interférences pour déterminer le temps de retard de l'onde indésirable par rapport à une onde principale dans les signaux de réception provenant de la relation entre le signal de détection de corrélation et le temps de retard fourni par les moyens d'exécution d'autocorrélation (130 à 133), et

des moyens (119) de traitement de la quantité de compensation pour déterminer la caractéristique d'amplitude et de phase des ondes indésirables contenues dans les signaux de réception délivrés par la sortie des moyens de compensation (103) sur la base du temps de retard des ondes indésirables fournies par les moyens de détection d'interférences (134; 140 à 145), et déterminer la quantité de compensation devant être appliquée aux moyens de compensation (103) à partir de leur caractéristique inverse, et dans lequel les moyens de détection d'interférences (140 à 145) incluent des moyens (141) de maintien de la caractéristique de corrélation pour maintenir la caractéristique de corrélation détectée de façon préliminaire, soit par la fréquence des signaux d'émission MDFO soit à partir du signal d'entrée dans une situation exempte de circulation, et incluent des moyens (142) de traitement des signaux de corrélation pour détecter la composante d'interférence contenue dans le signal d'entrée et présentant un niveau inférieur à celui des composantes éliminées par les moyens de compensation (103), par suppression des composantes de la caractéristique de corrélation retenue par les moyens (141) de maintien de la caractéristique de corrélation respectivement à partir de la caractéristique de corrélation détectée respectivement par les moyens d'exécution d'autocorrélation (130 à 133), ou à partir du signal d'entrée.

2. Répéteur de signaux d'émission MDFO selon la revendication 1, **caractérisé en ce qu'**il comprend en outre des moyens (105) de détection de la composante de signal pour détecter si la composante de signal est contenue ou non dans le signal de réception du signal de transmission MDFO,

dans lequel le processus de compensation des moyens de compensation est conçu de manière à s'arrêter lorsque ces moyens (105) détectent le fait que la composante de signal n'est pas ainsi contenue.

3. Répéteur de signaux d'émission MDFO selon la revendication 1, **caractérisé en ce que** les moyens (139) de traitement de la quantité de compensation incluent des moyens de détection de défaillance (1394) servant à détecter une anomalie du signal d'entrée, comprenant en outre :

des moyens de commande de sortie (106,107,120) pour atténuer ou interrompre le signal de sortie relais lorsqu'une anomalie est détectée par ces moyens (1394).

4. Répéteur de signaux d'émission MDFO selon la revendication 1, **caractérisé en ce qu'**il comporte en outre :

un filtre de limitation de bande pour supprimer les composantes situées à l'extérieur de la bande, dans un signal de réémission lors de la production du signal de réémission à partir du signal fourni par les moyens de compensation.

5. Récepteur de signaux d'émission MDFO, c'est-à-dire à multiplexage par répartition en fréquence orthogonale, comprenant des moyens de réception (110 à 112) pour recevoir des signaux d'émission MDFO, et des moyens de démodulation (160) pour démoduler les signaux d'émission multipliés par un traitement par transformation FFT des signaux de réception fournis par les moyens de réception (110 à 112), comprenant :

des moyens de compensation (103) pour recevoir les signaux de réception délivrés par les moyens de réception, compenser la caractéristique d'amplitude et de phase des signaux de réception sur la base d'une quantité de compensation donnée, éliminer des composantes d'ondes indésirables dues à la circulation et aux trajets multiples, et envoyer le reste aux moyens d'émission,

des moyens d'exécution d'autocorrélation (130 à 133) pour retarder séquentiellement, d'une durée spécifiée, des signaux de réception fournis par les moyens de réception, et détecter la corrélation avant et après le retard,

des moyens (134;140 à 145) de détection d'interférences pour déterminer le temps de retard de l'onde indésirable par rapport à une onde principale dans les signaux de réception provenant de la relation entre le signal de détection de corrélation et le temps de retard fourni par les moyens d'exécution d'autocorrélation (130 à 133), et

des moyens (119) de traitement de la quantité de compensation pour déterminer la caractéristique d'amplitude et de phase des ondes indésirables contenues dans les signaux de réception délivrés par la sortie des moyens de compensation (103) sur la base du temps de retard des ondes indésirables fournies par les moyens de détection d'interférences (134; 140 à 145), et déterminer la quantité de compensation devant être appliquée aux moyens de compensation (103) à partir de leur caractéristique inverse, et dans lequel les moyens de détection d'interférences (140 à 145) incluent des moyens (141) de maintien de la caractéristique de corrélation pour maintenir la caractéristique de corrélation détectée de façon préliminaire, soit par la fréquence des signaux d'émission MDFO soit à partir du signal d'entrée dans une situation exempte de circulation, et incluent des moyens (142) de traitement des signaux de corrélation pour détecter la composante d'interférence contenue dans le signal d'entrée et présentant un niveau inférieur à celui des composantes éliminées par les moyens de compensation (103), par suppression des composantes de la caractéristique de corrélation retenue par les moyens (141) de maintien de la caractéristique de corrélation respectivement à partir de la caractéristique de corrélation détectée respectivement par les moyens d'exécution d'autocorrélation (130 à 133) ou à partir du signal d'entrée.

6. Récepteur de signaux d'émission MDFO selon la revendication 5, **caractérisé en ce qu'**il comprend en outre des moyens (105) de détection de la composante de signal pour détecter si la composante de signal est contenue ou non dans le signal de réception du signal de transmission MDFO,

dans lequel le processus de compensation des moyens de compensation est conçu de manière à s'arrêter lorsque ces moyens (105) détectent le fait que la composante de signal n'est pas ainsi contenue.

FIG. 1

DOWN-CONVERTER 1
AD CONVERTER 2
QUADRATURE DEMODULATOR 3
COMPENSATOR 5
QUADRATURE MODULATOR 6
DA CONVERTER 7
UP-CONVERTER 8

RF INPUT SIGNAL
RF OUTPUT SIGNAL

DELAY UNIT 41
CORRELATION DETECTOR 43
INTEGRATOR 44
COMPENSATION AMOUNT CALCULATOR 45
DELAY CONTROLLER 42

COMPENSATION AMOUNT DETECTOR

4

EP 1 039 716 B1

14

FIG.2

FIG.3

FIG. 4

EP 1 039 716 B1

FIG. 5

RF SIGNAL → DOWN-CONVERTER → AGC ATTENUATOR 102 → ADDER → LEVEL DETECTOR 104 → SQUELCH 105 → ATTENUATOR 106 → SWITCH 107 → BPF 108 → UP-CONVERTER 109 → RF SIGNAL

128
UP-CONVERTER 127
103
TO COMPENSATION AMOUNT DETECTOR

110 DOWN-CONVERTER
111 AD CONVERTER
112 QUADRATURE DEMODULATOR
113 LPF
114 INTERFERENCE DETECTOR

ADDER 126
1253 1252 1251
DA CONVERTER | DA CONVERTER | DA CONVERTER
1243 1242 1241
FIFO | FIFO | FIFO

CLOCK GENERATOR CIRCUIT 129

1233 1232 1231
QUADRATURE MODULATOR | QUADRATURE MODULATOR | QUADRATURE MODULATOR

1221 COMPLEX FIR — DELAY UNIT
1222 COMPLEX FIR — DELAY UNIT 1212 1211
1223 COMPLEX FIR — DELAY UNIT 1213

115 DOWN-CONVERTER
116 AD CONVERTER
117 QUADRATURE DEMODULATOR
118 LPF

120 OUTPUT CONTROL DEVICE
119 COMPENSATION AMOUNT DETECTOR

EP 1 039 716 B1

17

FIG.6

134 INTERFERENCE DETECTOR

COORDINATE TRANSFORMER — 1341

RAM — 1342
AMPLITUDE DATA
ANGLE DATA

CORRELATION CHARACTERISTIC TABLE

CORRELATION SIGNAL PROCESSOR — 1343

AMPLITUDE DATA
ANGLE DATA
AMPLITUDE DATA
DELAY DATA

AUTO-CORRELATION CORRECTION CURVE GENERATOR — 1344

(DELAY TIME DATA)

TO COMPENSATION AMOUNT DETECTOR

REAL PART INTEGRATION

IMAGINARY PART INTEGRATION

133 INTEGRATOR

COMPLEX MULTIPLICATION — 130

DELAY UNIT — 131

DELAY CONTROLLER — 132

Q-AXIS DATA

I-AXIS DATA

18

FIG.7

EP 1 039 716 B1

EP 1 039 716 B1

144 ~ INTERFERENCE
DETECTION SIGNAL
GENERATOR
TO COMPENSATION
AMOUNT DETECTOR

140

I,Q → COORDINATE
TRANSFORMER
I,Q→A, θ

141
RAM
(CORRELATION
CHARACTERISTIC TABLE 1)

143
RAM/ROM
(CORRELATION
CHARACTERISTIC TABLE 2)

DELAY TIME

142
CORRELATION
SIGNAL
PROCESSOR

145
CORRELATION
SIGNAL
PROCESSOR

FIG. 8

150 ~ COMPENSATION
SIGNAL GENERATOR
TO COMPENSATOR

146

I,Q → COORDINATE
TRANSFORMER
I,Q→A, θ

147
RAM
(CORRELATION
CHARACTERISTIC TABLE 1)

149
RAM/ROM
(CORRELATION
CHARACTERISTIC TABLE 2)

DELAY TIME

148
CORRELATION
SIGNAL
PROCESSOR

151
CORRELATION
SIGNAL
PROCESSOR

TO OUTPUT
CONTROLLER

FIG. 9

FIG.10

EP 1 039 716 B1

EP 1 039 716 B1

RF INPUT
SIGNAL

1
DOWN-
CONVERTER

2
AD
CONVERTER

3
QUADRATURE
DEMODULATOR

5
COMPENSATOR

FFT

9

41
DELAY UNIT

43
CORRELATION
DETECTOR

44
INTEGRATOR

45
COMPENSATION
AMOUNT
CALCULATOR

4

42
DELAY
CONTROLLER

COMPENSATION AMOUNT DETECTOR

FIG.11

FIG. 12

RF SIGNAL → DOWN-CONVERTER

110 DOWN-CONVERTER
111 AD CONVERTER
112 QUADRATURE DEMODULATOR
113 LPF
114 INTERFERENCE DETECTOR

102 AGC ATTENUATOR
103 ADDER
128 UP-CONVERTER
127
104 LEVEL DETECTOR
105 SQUELCH
160 FFT

TO COMPENSATION AMOUNT DETECTOR

126 ADDER
1251 DA CONVERTER
1252 DA CONVERTER
1253 DA CONVERTER
1241 FIFO
1242 FIFO
1243 FIFO
1231 QUADRATURE MODULATOR
1232 QUADRATURE MODULATOR
1233 QUADRATURE MODULATOR
129 CLOCK GENERATOR CIRCUIT

1221 COMPLEX FIR
1222 COMPLEX FIR
1223 COMPLEX FIR
1211 DELAY UNIT
1212 DELAY UNIT
1213 DELAY UNIT

115 DOWN-CONVERTER
116 AD CONVERTER
117 QUADRATURE DEMODULATOR
118 LPF
119 COMPENSATION AMOUNT DETECTOR